# EUROPEAN PATENT APPLICATION

(11) **EP 4 184 626 A1**
(43) Date of publication of application: **24.05.2023**
(21) Application number: 20941203.0
(22) Date of filing: 10.07.2020
(51) Int. Cl.: H01M 8/18, H01M 8/0273

(54) **INTEGRATED ELECTRODE FRAME STRUCTURE, AND PREPARATION METHOD THEREFOR AND APPLICATION THEREOF**

(30) Priority: 19.06.2020 CN 202010570390
(71) Applicant: Dalian Institute Of Chemical Physics, Chinese Academy Of Sciences, Liaoning 116023 (CN)
(72) Inventor: LI, Xianfeng, Dalian, Liaoning 116023 (CN); SHI, Dingqin, Dalian, Liaoning 116023 (CN); ZHANG, Huamin, Dalian, Liaoning 116023 (CN)
(74) Representative: Bayramoglu et al.
(86) International application number: PCT/CN2020/101331
(87) International publication number: WO 2021/253543

(57) **Abstract**

The present application provides an integrated electrode frame and preparation method and use thereof. The integrated electrode frame includes a positive electrode frame, a negative electrode frame, and a membrane. Each of the positive electrode frame and the negative electrode frame is a flat plate with a central through-hole. The membrane is placed between the positive electrode frame and the negative electrode frame, and the membrane is located at the through-hole and hermetically connected to a peripheral edge of the through-hole. A peripheral edge of the positive electrode frame is hermetically connected to a peripheral edge of the negative electrode frame. A material composition of a connecting part of the positive electrode frame and the negative electrode frame contains at least one material which is the same as that of the positive electrode frame or the negative electrode frame. In the present application, the structures and materials of the electrode frames and the membrane are optimized to achieve a direct hermetical connection between the membrane and the electrode frames and improve the sealing reliability and volumetric energy density of an all-vanadium flow battery.

## Description

### TECHNICAL FIELD

The present application relates to an integrated electrode frame and a preparation method and use thereof.

### BACKGROUND

Renewable energy sources such as wind and solar energy are inherently random, intermittent, unstable, and difficult to connect directly to the grid, which to some extent limits the development and utilization of renewable energy. The key to solving this problem is to develop energy storage technologies suitable for renewable energy.

Energy storage technologies include physical and chemical energy storage technologies. Physical energy storage technologies include pumped energy storage technology, compressed air energy storage technology, flywheel energy storage technology, etc. Chemical energy storage technologies are mainly implemented by using lead acid batteries, sodium sulfur batteries, flow batteries, lithium-ion batteries, etc. Each energy storage technology requires a suitable application scenario. flow batteries, sodium sulfur batteries, lead acid batteries, lithium-ion batteries are suitable for large-scale chemical energy storage applications.

Among flow batteries, the all-vanadium flow battery has independently designed output power and energy storage capacity, and only employs vanadium ions as electrolyte ions, thereby avoiding the phase changes commonly encountered by other batteries during charging and discharging. Overall, the all-vanadium flow battery has attracted much attention due to its long service life, excellent charge and discharge performance, deep discharge without damaging the battery, high safety, and high energy efficiency.

The stack structure of a traditional all-vanadium flow battery sequentially includes a current collector, a bipolar plate, a sealing gasket, an electrode frame, a sealing gasket, an electrode, a membrane, an electrode, a sealing gasket, an electrode frame, a sealing gasket, a bipolar plate, and a current collector. The membrane is configured to separate the positive electrode from the negative electrode, and the sealing gasket is placed between the membrane and the electrode frame to prevent external leakage of the battery. In addition, such structure requires that the membrane and the electrode frame must be identical in terms of size. In order to meet the assembly and positioning requirements of the stack and the liquidity requirement of the electrolyte, it is necessary to drill holes in the diagonal corners of the membrane. During the long-term operation of the battery, the electrolyte of the stack may leak, resulting in a series of problems, for example, the battery capacity and performance are degraded, and external parts are corroded by the acidic electrolyte, etc. In particular, as the pressure of the battery testing system increases with the increase in the power of the stack, the stack is prone to external and internal leakage due to excessive system pressure, and the electrolyte is prone to leakage due to the rupture of the membrane during drilling. Moreover, in the traditional stack structure, the sealing gasket is required for sealing and isolation between each two parts, resulting in a low volumetric energy density of the battery.

### SUMMARY

In order to solve the above technical problems, the present application provides an integrated electrode frame and a preparation method and use thereof. The present application improves the sealing reliability and volumetric energy density of a flow battery by optimizing structures and materials of electrode frames and a membrane.

In order to achieve the above objective, the present application adopts the following technical solutions:

A first aspect of the present application provides an integrated electrode frame. The integrated electrode frame includes a positive electrode frame, a negative electrode frame, and a membrane.

Each of the positive electrode frame and the negative electrode frame is a flat plate with a central through-hole.

The flat plate has a fluid distribution channel.

The membrane is placed between the positive electrode frame and the negative electrode frame, and the membrane is located at the through-hole and hermetically connected to a peripheral edge of the through-hole.

A peripheral edge of the positive electrode frame is hermetically connected to a peripheral edge of the negative electrode frame; and a material composition of a connecting part of the positive electrode frame and the negative electrode frame contains at least one material which is the same as that of the positive electrode frame or the negative electrode frame.

Optionally, the same material is at least one selected from the group consisting of polypropylene (PP), polyethylene (PE), polystyrene (PS), polycarbonate (PC), acrylonitrile butadiene styrene (ABS), polymethyl methacrylate (PMMA), and polyethylene terephthalate (PET).

Optionally, the flat plate has a fluid distribution channel.

Specifically, the fluid distribution channel is provided on a surface of the flat plate, and located on two opposite sides of the surface and close to an edge; another surface of the flat plate is not provided with the fluid distribution channel; the central through-holes of the positive electrode frame and the negative electrode frame are arranged opposite to each other; and the peripheral edges of the through-holes are laminated with each other.

Optionally, the positive electrode frame and the negative electrode frame have same shape and size.

The size of the membrane is smaller than the size of the positive electrode frame and the size of the negative electrode frame.

Specifically, the (outer) peripheral edge of the positive electrode frame and the (outer) peripheral edge of the negative electrode frame have same shape and size.

In a laminating process, the (outer) peripheral edge of the positive electrode frame and the (outer) peripheral edge of the negative electrode frame are laminated correspondingly; a peripheral edge of the membrane is located in a laminating zone of the positive electrode frame and the negative electrode frame; a gap for sealing between the positive electrode frame and the negative electrode frame is reserved between the peripheral edge of the membrane and the (outer) peripheral edge of each of the positive electrode frame and the negative electrode frame; and a gap for sealing between the membrane and one of the positive electrode frame and the negative electrode frame is reserved between the peripheral edge of the membrane and the central through-hole of the one of the positive electrode frame and the negative electrode frame.

Specifically, the central through-hole of the positive electrode frame and the central through-hole of the negative electrode frame have same position, shape, and size.

Optionally, the positive electrode frame or the negative electrode frame has an encircling step around the through-hole; and the membrane is located on the encircling step, and is hermetically connected to the encircling step.

Optionally, the membrane is non-transparent or transparent.

One of the positive electrode frame and the negative electrode frame is a transparent electrode frame, and the other of the positive electrode frame and the negative electrode frame is a non-transparent electrode frame.

Optionally, if the membrane which is hermetically connected to the positive electrode frame is non-transparent, the positive electrode frame is the transparent electrode frame, and the negative electrode frame is the non-transparent electrode frame.

If the membrane which is hermetically connected to the positive electrode frame is transparent, the positive electrode frame is the non-transparent electrode frame, and the negative electrode frame is the transparent electrode frame.

A material composition of a connecting part of the membrane and the positive electrode frame contains at least one material which is the same as that of the membrane or the positive electrode frame.

The same material is at least one selected from the group consisting of PP, PE, PS, PC, ABS, PMMA, and PET.

Optionally, a laser transmittance of the transparent electrode frame is 20% or above.

A laser transmittance of the non-transparent electrode frame is 5% or below.

A difference between the laser transmittance of the transparent electrode frame and the laser transmittance of the non-transparent electrode frame is 15-100%.

Optionally, the laser transmittance of the transparent electrode frame is 40% or above.

The laser transmittance of the non-transparent electrode frame is 1% or below.

The difference between the laser transmittance of the transparent electrode frame and the laser transmittance of the non-transparent electrode frame is 35-100%.

Specifically, an upper limit of the laser transmittance of the transparent electrode frame is independently selected from 75%, 80%, 90%, 95%, and 100%; and a lower limit of the laser transmittance of the transparent electrode frame is independently selected from 20%, 30%, 40%, 50%, and 60%.

Specifically, an upper limit of the laser transmittance of the non-transparent electrode frame is independently selected from 2.5%, 3%, 3.5%, 4%, and 5%; a lower limit of the laser transmittance of the non-transparent electrode frame is independently selected from 0, 0.5%, 1%, 1.5%, and 2%.

Optionally, the transparent material includes at least one selected from the group consisting of PP, PE, PS, PC, ABS, PMMA, and PET.

The non-transparent material includes the transparent material and a toner.

Optionally, the toner is at least one selected from the group consisting of a black toner, a yellow toner, a tan toner, a brown toner, and a dark blue toner.

The transparent material further includes a white toner.

Optionally, the membrane has a thickness of 100 µm to 3 mm, a porosity of 40-90%, and a pore size of 1-300 nm.

Optionally, a content of the same material accounts for 10% or more of a total weight of the material composition of respective structure.

Optionally, a content of the same material accounts for 40% or more of a total weight of the material composition of respective structure.

Specifically, an upper limit of the thickness of the membrane is independently selected from 1,200 µm, 1,500 µm, 2,000 µm, 2,500 µm, and 3,000 µm; and a lower limit of the thickness of the membrane is independently selected from 100 µm, 300 µm, 500 µm, 700 µm, and 1,000 µm.

Specifically, an upper limit of the porosity of the membrane is independently selected from 65%, 70%, 75%, 80%, and 90%; and a lower limit of the porosity of the membrane is independently selected from 40%, 45%, 50%, 55%, and 60%.

A second aspect of the present application provides a method for preparing the integrated electrode frame.

The method includes at least the following steps:
covering the membrane on a surface of one of the positive electrode frame and the negative electrode frame where the through-hole is formed, and hermetically connecting the membrane with the peripheral edge of the through-hole to form a membrane-bonded electrode frame; and
laminating the other of the positive electrode frame and the negative electrode frame with the membrane-bonded electrode frame, and hermetically connecting the peripheral edge of the other of the positive electrode frame and the negative electrode frame with the peripheral edge of the membrane-bonded electrode frame, where the membrane is located between the positive electrode frame and the negative electrode frame to form the integrated electrode frame.

Optionally, when the membrane is transparent, the method includes:
covering the membrane on a surface of a non-transparent electrode frame where the through-hole is formed, and hermetically connecting the membrane with the peripheral edge of the through-hole to form a membrane-bonded non-transparent electrode frame; and
laminating a transparent electrode frame with the membrane-bonded non-transparent electrode frame, and fixedly connecting a peripheral edge of the transparent electrode frame with a peripheral edge of the membrane-bonded non-transparent electrode frame, where the membrane is located between the transparent electrode frame and the non-transparent electrode frame to form the integrated electrode frame; and
alternatively, when the membrane is non-transparent, the method includes:
   covering the membrane on a surface of the transparent electrode frame where the through-hole is formed, and hermetically connecting the membrane with the peripheral edge of the through-hole to form a membrane-bonded transparent electrode frame; and
   laminating the non-transparent electrode frame with the membrane-bonded transparent electrode frame, and fixedly connecting a peripheral edge of the non-transparent electrode frame with a peripheral edge of the membrane-bonded transparent electrode frame, where the membrane is located between the non-transparent electrode frame and the transparent electrode frame to form the integrated electrode frame.

Optionally, hermetical connection is implemented by laser welding.

Specifically, the method includes the following process:
A: when the membrane is transparent:
   placing the peripheral edge of the membrane on the non-transparent electrode frame; covering an open end of the central through-hole with the membrane; bonding the peripheral edge of the membrane on a side surface to the non-transparent electrode frame around the central through-hole, that is, hermetically and fixedly connecting the peripheral edge of the membrane with the non-transparent electrode frame around the central through-hole by welding; alternatively, etching the encircling step at the peripheral edge on the open end of the central through-hole on a side surface of the non-transparent electrode frame close to the membrane, in a direction away from the central through-hole; and bonding the peripheral edge on the side surface of the membrane to the encircling step, that is, hermetically and fixedly connecting the peripheral edge of the membrane with the encircling step or the encircling step and the non-transparent electrode frame around the encircling step by welding; and
   laminating the transparent electrode frame with the membrane-bonded non-transparent electrode frame; hermetically and fixedly connecting the peripheral edge of the positive electrode frame and the peripheral edge of the negative electrode frame by welding, such that the positive electrode frame, the membrane, and the negative electrode frame are sequentially laminated into the integrated electrode frame by welding; and
alternatively, B: when the membrane is non-transparent:
   placing the peripheral edge of the membrane on the transparent electrode frame; covering an open end of the central through-hole with the membrane; bonding the peripheral edge of the membrane on a side surface to the transparent electrode frame around the central through-hole, that is, hermetically and fixedly connecting the peripheral edge of the membrane with the transparent electrode frame around the central through-hole by welding; alternatively, etching the encircling step at the peripheral edge on the open end of the central through-hole on a side surface of the transparent electrode frame close to the membrane, in a direction away from the central through-hole; and bonding the peripheral edge on the side surface of the membrane to the encircling step, that is, hermetically and fixedly connecting the peripheral edge of the membrane with the encircling step or the encircling step and the transparent electrode frame around the encircling step by welding; and
   laminating the transparent electrode frame with the membrane-bonded non-transparent electrode frame; hermetically fixedly connecting the peripheral edge of the positive electrode frame and the peripheral edge of the negative electrode frame by welding, such that the positive electrode frame, the membrane, and the negative electrode frame are sequentially laminated into the integrated electrode frame by welding.

During the laminating process, the side surface of one of the positive electrode frame and the negative electrode frame with the fluid distribution channel is laminated with the surface of the other of the positive electrode frame and the negative electrode frame without the fluid distribution channel. The central through-hole of the positive electrode frame and the central through-hole of the negative electrode frame are arranged opposite to each other. The peripheral edges of the through-holes are laminated with each other, and the laminating parts are welded to form an encircling welding zone.

Optionally, the membrane is hermetically connected to the peripheral edge of the through-hole by laser welding with a welding power of 2-50 W and a welding speed of 2-20 mm/s.

Specifically, an upper limit of the welding power is independently selected from 22 W, 25 W, 33 W, 35 W, 40 W, 45 W, and 50 W; and a lower limit of the welding power is independently selected from 2 W, 5 W, 10 W, 13 W, 15 W, 17 W, and 20 W.

Specifically, an upper limit of the welding speed is independently selected from 10 mm/s, 11 mm/s, 13 mm/s, 15 mm/s, 17 mm/s, 19 mm/s, and 20 mm/s; and a lower limit of the welding speed is independently selected from 2 mm/s, 3 mm/s, 4 mm/s, 5 mm/s, 6 mm/s, 7 mm/s, and 8 mm/s.

Optionally, the peripheral edges of the electrode frames are hermetically connected by laser welding with a welding power of 15-300 W and a welding speed of 5-50 mm/s.

Specifically, an upper limit of the welding power is independently selected from 130W, 140W, 150W, 170W, 200W, 260W, and 300W; and a lower limit of the welding power is independently selected from 15W, 30W, 60W, 70W, 75W, 80W, and 100W.

Specifically, an upper limit of the welding speed is independently selected from 20 mm/s, 25 mm/s, 30 mm/s, 35 mm/s, 40 mm/s, 45 mm/s, and 50 mm/s; and a lower limit of the welding speed is independently selected from 5 mm/s, 8 mm/s, 10 mm/s, 13 mm/s, 15 mm/s, 17 mm/s, and 18 mm/s.

A third aspect of the present application provides a use of the integrated electrode frame described in any one of the above paragraphs or an integrated electrode frame prepared by the method described in any one of the above paragraphs for a stack of all-vanadium flow batteries, where the stack includes one cell or a plurality of cells connected in series; the cell includes the integrated electrode frame; and the stack has a power of 0.5-100 kW.

The present application has the following beneficial effects:
1) In the present application, the structures and materials of the electrode frames and the membrane are optimized to achieve a direct hermetical connection between the membrane and the electrode frames and improve the sealing reliability of the all-vanadium flow battery. The present application is particularly applicable to a high-power flow battery for large-scale energy storage.
2) The present application achieves the sealing of the battery structure through direct welding, reducing the use of the sealing gasket, reducing the thickness of the battery, and improving the volumetric energy density of the battery.
3) The present application uses the membrane with high durability, high ion selectivity, and high ion conductivity, which improves the performance and cycling stability of the battery.
4) The present application reduces the use area of the membrane and improves the utilization of the membrane.
5) The present application broadens the scope of use of the membrane for the all-vanadium flow battery and the sealing between the membrane and the electrode frame.

### BRIEF DESCRIPTION OF THE DRAWINGS

FIG. 1 is a structural diagram of a membrane and a positive electrode frame that are welded together according to Embodiment 1 of the present application;
FIG. 2 is a structural diagram of an integrated electrode frame according to Embodiment 1 of the present application; and
FIG. 3 is a structural diagram of a conventional stack of all-vanadium flow batteries.

### Reference Numerals:

1. positive electrode frame; 2. membrane; 3. through-hole; 4. encircling step; 5. negative electrode frame; and 6. sealing gasket.

### DETAILED DESCRIPTION OF THE EMBODIMENTS

The present disclosure will be described in detail below with reference to embodiments, but the present disclosure is not limited to these embodiments.

### Embodiment 1

A positive electrode frame is made of 100wt% polyethylene (PE), and has a transmittance of 95%. A negative electrode frame is made of a non-transparent material including 99wt% PE and 1wt% black masterbatch (PLASBLAK PE2718 by Cabot), and has a transmittance of 1%. A membrane is made of a non-transparent material including 99wt% PE and 1wt% black masterbatch (PLASBLAK PE2718 by Cabot), and has a transmittance of 1%. The positive electrode frame 1 is 30 cm long, 40 cm wide, and 4.4 mm thick, while the negative electrode frame 5 is 30 cm long, 40 cm wide, and 2.7 mm thick. Central through-hole 3 of each of the positive electrode frame and the negative electrode frame is 23.5 cm long and 32.5 cm wide. The membrane 2 is 26 cm long and 35 cm wide. Encircling step 4 with a width of 5 mm and a thickness of 1 mm is etched at a peripheral edge of the central through-hole 3 of the positive electrode frame 1 in a direction away from the through-hole. The membrane has a thickness of 500 µm, a porosity of 70%, and a pore size of 1-300 nm.

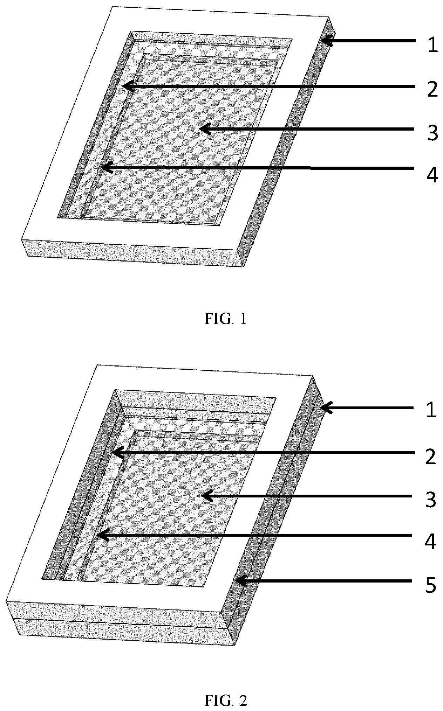

As shown in FIGS. 1 and 2, the membrane 2 is welded to the encircling step 4 of the positive electrode frame 1 by laser welding, with a welding power of 10 W and a welding speed of 8 mm/s. The positive electrode frame 1 and the negative electrode frame 5 are welded together, with a welding power of 60 W and a welding speed of 18 mm/s, to form an integrated electrode frame of the positive electrode frame 1, the membrane 2, and the negative electrode frame 5. In this way, 10 integrated electrode frames are sequentially welded, and are assembled into a 10-cell 2 kW stack for an all-vanadium flow battery.

Leakage testing is performed on the assembled 10-cell stack for the all-vanadium flow battery, with a maximum internal leakage testing pressure of 0.03 MPa and an external leakage testing pressure of 0.26 MPa. No air leakage is observed, and the stack is 103 mm thick, measured by a scale. The battery performance is tested at a constant current of 120 mA/cm², and the battery has a coulomb efficiency of 99.3%.

### Embodiments 2 to 13

In these embodiments, the test conditions and process of the stack are the same (with the same parameter units) as those in Embodiment 1, except for the following aspects.

The material composition of the positive electrode frame and the negative electrode frame is shown in Table 1. PLASWITER PE7606 by Cabot is selected as a white toner. The membrane is made of a non-transparent material including 80wt% PE, 19wt% of PP, and 1wt% black masterbatch (PLASBLAK PE2718 by Cabot), and has a transmittance of 1%. The positive electrode frame is 30 cm long, 40 cm wide, and 4.4 mm thick, while the negative electrode frame is 30 cm long, 40 cm wide, and 2.7 mm thick. The central through-hole of each of the positive electrode frame and the negative electrode frame is 23.5 cm long and 32.5 cm wide. The membrane is 26 cm long and 35 cm wide. The encircling step with a width of 5 mm and a thickness of 1 mm is etched at a peripheral edge of the central through-hole of the positive electrode frame in a direction away from the through-hole. The assembled stack is 103 mm thick. In Embodiments 2 to 12, an integrated electrode frame of the membrane, the positive electrode frame, and the negative electrode frame is formed. Multiple integrated electrode frames are assembled into a 10-cell 2 kW stack for an all-vanadium flow battery.

**Table 1**

| Em bod ime nts | Material composition of positive electrode frame (by weight) | | | Material composition of negative electrode frame (by weight) | | | Tran smit tanc e of posit ive elect rode fram e, % | Tr an s mi tta nc e of ne ga tiv e elec tro de fra m e, % | Tran smit tanc e diffe renc e of posit ive and nega tive electrode fram es, % | Membran e and electrode frame welding power and speed | | Positive and negative electrode frame welding power and speed | | External and internal leakage testing pressures of stack | | Coul omb effici ency of stack % |
|---|---|---|---|---|---|---|---|---|---|---|---|---|---|---|---|---|
| | Poly ethy lene % | PP % | Whi te mast erba tch, % | PE, % | PP, % | Blac k mast erba tch, % | | | | Pow er | Sp ee d | Pow er | Spee d | | | |
| 2 | 10 | 89.7 | 0.3 | 10 | 89 | 1 | 90 | 1 | 89 | 15 | 8 | 70 | 18 | 0.029 | 0.25 | 98.9 |
| 3 | 10 | 89.7 | 0.3 | 20 | 79 | 1 | 90 | 1 | 89 | 13 | 8 | 70 | 18 | 0.027 | 0.25 | 98.8 |
| 4 | 20 | 79.2 | 0.8 | 10 | 89 | 1 | 75 | 1 | 74 | 20 | 8 | 80 | 17 | 0.025 | 0.24 | 98.9 |
| 5 | 20 | 79.2 | 0.8 | 30 | 69 | 1 | 75 | 1 | 74 | 15 | 8 | 70 | 17 | 0.025 | 0.23 | 99.0 |
| 6 | 30 | 68.8 | 1.2 | 10 | 89 | 1 | 60 | 1 | 59 | 25 | 7 | 140 | 15 | 0.023 | 0.22 | 99.5 |
| 7 | 30 | 68.8 | 1.2 | 40 | 59 | 0.8 | 60 | 3 | 57 | 22 | 6 | 130 | 13 | 0.023 | 0.22 | 99.3 |
| 8 | 40 | 58.3 | 1.7 | 20 | 79.2 | 0.8 | 40 | 3 | 37 | 30 | 6 | 170 | 10 | 0.020 | 0.20 | 99.1 |
| 9 | 40 | 58.3 | 1.7 | 50 | 49.5 | 0.5 | 40 | 5 | 35 | 25 | 5 | 150 | 10 | 0.020 | 0.20 | 99.5 |
| 10 | 50 | 47 | 3 | 10 | 89.5 | 0.5 | 20 | 5 | 15 | 35 | 5 | 300 | 10 | 0.018 | 0.17 | 99.1 |
| 11 | 50 | 47 | 3 | 50 | 49.5 | 0.5 | 20 | 5 | 15 | 33 | 5 | 260 | 10 | 0.018 | 0.17 | 98.9 |
| 12 | 15 | 84.5 | 0.5 | 15 | 84 | 1 | 80 | 1 | 79 | 17 | 8 | 75 | 17 | 0.026 | 0.24 | 98.2 |
| 13 | 100 | - | - | 10 | 89 | 1 | 95 | 1 | 94 | 10 | 8 | 60 | 18 | 0.030 | 0.26 | 98.7 |

### Embodiment 14

The positive electrode frame is made of 100wt% PE, and has a transmittance of 95%. The negative electrode frame is made of a non-transparent material including 99wt% PE and 1wt% black masterbatch (PLASBLAK PE2718 by Cabot), and has a transmittance of 1%. The membrane is made of a non-transparent material including 99wt% PE and 1wt% black masterbatch (PLASBLAK PE2718 by Cabot), and has a transmittance of 1%. The positive electrode frame 1 is 30 cm long, 40 cm wide, and 4.4 mm thick, while the negative electrode frame 5 is 30 cm long, 40 cm wide, and 2.7 mm thick. The central through-hole 3 of each of the positive electrode frame and the negative electrode frame is 23.5 cm long and 32.5 cm wide. The membrane 2 is 26 cm long and 35 cm wide. The membrane has a thickness of 500 µm, a porosity of 70%, and a pore size of 1-300 nm.

The membrane 2 is welded to the peripheral edge of the central through-hole of the positive electrode frame 1, with a welding power of 30W and a welding speed of 5 mm/s. The positive electrode frame 1 and the negative electrode frame 5 are welded together, with a welding power of 60 W and a welding speed of 18 mm/s, to form an integrated electrode frame of the positive electrode frame 1, the membrane 2, and the negative electrode frame 5. In this way, 10 integrated electrode frames are sequentially welded, and are assembled into a 10-cell 2 kW stack for an all-vanadium flow battery.

Leakage testing is performed on the assembled 10-cell stack for the all-vanadium flow battery, with a maximum internal leakage testing pressure of 0.025 MPa and an external leakage testing pressure of 0.26 MPa. No air leakage is observed, and the stack is 108 mm thick, measured by a scale. The battery performance is tested at a constant current of 120 mA/cm², and the battery has a coulomb efficiency of 99.0%.

The test results of the above embodiments show that:
1. When the content of the same material in the welded material reaches 10% or more of the welded material, both the internal and external leakage testing of the assembled stack meet the requirements (the internal leakage testing pressure is at least 0.018 MPa, and the external leakage testing pressure is at least 0.17 MPa).
2. When the content of the same material in the welded material increases, the ability of the stack to resist both internal and external leakage testing pressures is improved.
3. When the transmittance of the positive electrode frame is not lower than 20% and the transmittance of the negative electrode frame is not higher than 5%, effective welding can be achieved, thereby ensuring the air tightness of the stack.
4. As the transmittance difference between the positive electrode frame and the negative electrode frame continues to increase, the ability of the finally assembled stack to resist internal and external leakage testing pressures continues to improve, and the laser welding power continues to decrease, saving energy. In addition, under the condition that the transmittance difference between the positive electrode frame and the negative electrode frame remains unchanged, the laser welding power is increased, thereby increasing the welding speed.

All other conditions not mentioned in the following Comparative Examples 1 to 4 are the same as those in Embodiment 1.

### Comparative Example 1

The positive electrode frame is made of 100wt% PE, and has a transmittance of 95%. The negative electrode frame is made of a non-transparent material including 99wt% PE and 1wt% black masterbatch (PLASBLAK PE2718 by Cabot), and has a transmittance of 1%. The membrane is made of a non-transparent material including 99wt% PE and 1wt% black masterbatch (PLASBLAK PE2718 by Cabot), and has a transmittance of 1%. Each of the positive electrode frame and the negative electrode frame is 30 cm long, 40 cm wide, and 3.55 mm thick. The central through-hole of each of the positive electrode frame and the negative electrode frame is 23.5 cm long and 32.5 cm wide. The membrane is 30 cm long and 40 cm wide. The membrane has a thickness of 500 µm, a porosity of 70%, and a pore size of 1-300 nm.

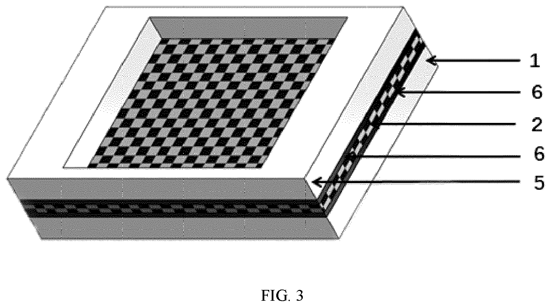

As shown in FIG. 3, a conventional stack structure is used, and the membrane and the electrode frame are sealed through sealing gasket 6. With the same assembly process, a 10-cell stack is assembled for an all-vanadium flow battery.

Leakage testing is performed on the assembled 10-cell 2 kW stack for the all-vanadium flow battery. A longitudinal surface of the membrane 2 is directly exposed, which can easily lead to small longitudinal leakage. For this reason, the maximum internal leakage testing pressure is 0.012 MPa, and the external leakage testing pressure of 0.08 MPa. The stack is 130 mm thick, measured by a scale. The battery performance is tested at a constant current of 120 mA/cm², and the battery has a coulomb efficiency of 93.5%.

Embodiment 1 and Comparative Example 1 use the same assembly process. The membrane is welded with the positive electrode frame and the negative electrode frame, improving the sealing reliability of the stack. The maximum internal leakage testing pressure is 0.03 MPa, and the external leakage testing pressure is 0.26 MPa. The reliability of the stack is improved, the long-term cycling stability of the battery is significantly improved, and the life of the battery is extended. The stack in Embodiment 1 is 103 mm thick, and the stack in Comparative Example 1 is 130 mm thick. Compared with Comparative Example 1, in Embodiment 1, the volumetric energy density of the stack is increased by 26.2%.

### Comparative Example 2

The positive electrode frame is made of a non-transparent material including 99wt% PE and 1wt% black masterbatch (PLASBLAK PE2718 by Cabot), and has a transmittance of 1%. The negative electrode frame is made of a transparent material including 100wt% PP, and has a transmittance of 95%. The membrane is made of a non-transparent material including 99wt% PE and 1wt% black masterbatch (PLASBLAK PE2718 by Cabot), and has a transmittance of 1%. The positive electrode frame is 30 cm long, 40 cm wide, and 4.4 mm thick, while the negative electrode frame is 30 cm long, 40 cm wide, and 2.7 mm thick. The central through-hole of each of the positive electrode frame and the negative electrode frame is 23.5 cm long and 32.5 cm wide. The membrane is 26 cm long and 35 cm wide. An encircling step with a width of 5 mm and a thickness of 1 mm is etched at a peripheral edge of the central through-hole of the positive electrode frame. The membrane has a thickness of 500 µm, a porosity of 70%, and a pore size of 1-300 nm.

The membrane is welded to the encircling step with a width of 5 mm at the peripheral edge of the central through-hole of the negative electrode frame, with a welding power of 1W and a welding speed of 5 mm/s. The positive electrode frame and the negative electrode frame are welded together, with a welding power of 14 W and a welding speed of 10 mm/s, to form an integrated electrode frame of the positive electrode frame, the membrane, and the negative electrode frame. In this way, 10 integrated electrode frames are sequentially welded.

The integrated electrode frames are assembled into a 10-cell 2 kW stack for an all-vanadium flow battery. Leakage testing is performed on the assembled 10-cell stack for the all-vanadium flow battery, with a maximum internal leakage testing pressure of 0.015 MPa and an external leakage testing pressure of 0.08 MPa. The stack is 103 mm thick, measured by a scale. The battery performance is tested at a constant current of 120 mA/cm², and the battery has a coulomb efficiency of 96.2%.

The comparison of the data of Embodiment 1 and Comparative Example 2 shows that although the two materials without the same material can be welded together, their sealing reliability is poor, and they cannot meet the pressure performance requirements of a high-power stack.

### Comparative Examples 3 to 4

The testing conditions of Comparative Examples 3 to 4 differing from Embodiment 1 are shown in Table 2, and those the same as Embodiment 1 can be referred to Embodiment 1.

**Table 2**

| Comp arative Exam ple | Material composition of positive electrode frame | | | Material composition of negative electrode frame | | | Transm ittance of positiv e electro de frame % | Transm ittance of negativ e electro de frame, % | Transm ittance differe nce of positiv e and negativ e electro de frames, % | Membra ne and electrode frame welding power and speed | | Positive and negative electrode frame welding power and speed | | External and internal leakage testing pressure s of stack | | Coul omb effici ency of stack % |
|---|---|---|---|---|---|---|---|---|---|---|---|---|---|---|---|---|
| | Polyet hylene % | P P % | W hit e ton er % | Polyet hylene % | P P % | B1 ac k to ne r % | | | | Po we r | Sp ee d | Po we r | Sp ee d | | | |
| 3 | 10 | 8 9. 7 | 3.5 | 10 | 8 9 | 0.5 | 15 | 5 | 10 | 55 | 5 | 40 0 | 10 | 0. 00 8 | 0. 05 6 | 91 |
| 4 | 100 | - | - | 5 | 9 4 | 1 | 95 | 1 | 94 | 10 | 8 | 60 | 18 | 0. 01 | 0. 06 | 92 |

The comparison of the comparative examples with the embodiment shows that:
1. The same assembly process is used, and the membrane is welded with the positive electrode frame and the negative electrode frame. The design improves the ability of the stack to resist the leakage testing pressures, improves the coulomb efficiency of the battery, and improves the operational reliability of the stack.
2. When the same material accounts for more than 10wt% of the welded material, the welding reliability is guaranteed, and the withstand pressure increases with the increase of the content.
3. The membrane is welded with the positive electrode frame and the negative electrode frame, and the positive electrode frame and the negative electrode frame are directly welded to form the integrated electrode frame. There is no need to drill a flow channel hole on the membrane, improving the reliability of the membrane and extending the service life of the battery.
4. The present application reduces the use of the sealing gasket, reduces the thickness of the battery, reduces the volume of the stack, and improves the volumetric energy density of the battery.
5. Compared with traditional structures, the present application reduces the use of the sealing material, and reduces the area of the membrane by about 30%, greatly reducing the material cost of the stack.

The above embodiments are merely some of the embodiments of the present application, and do not limit the present application in any form. Although the present application is disclosed above with the preferred embodiments, the present application is not limited thereto. Some changes or modifications made by any technical personnel familiar with the profession using the technical content disclosed above without departing from the scope of the technical solutions of the present application are equivalent to equivalent implementation cases and fall within the scope of the technical solutions.

## Claims

1. An integrated electrode frame, comprising a positive electrode frame, a negative electrode frame, and a membrane, wherein
each of the positive electrode frame and the negative electrode frame is a flat plate with a central through-hole;
the membrane is placed between the positive electrode frame and the negative electrode frame, and the membrane is located at the through-hole and hermetically connected to a peripheral edge of the through-hole; and
a peripheral edge of the positive electrode frame is hermetically connected to a peripheral edge of the negative electrode frame; and a material composition of a connecting part of the positive electrode frame and the negative electrode frame contains at least one material which is the same as that of the positive electrode frame or the negative electrode frame.

2. The integrated electrode frame according to claim 1, wherein the same material is at least one selected from the group consisting of polypropylene (PP), polyethylene (PE), polystyrene (PS), polycarbonate (PC), acrylonitrile butadiene styrene (ABS), polymethyl methacrylate (PMMA), and polyethylene terephthalate (PET).

3. The integrated electrode frame according to claim 1, wherein the positive electrode frame and the negative electrode frame have same shape and size; and
a size of the membrane is smaller than a size of the positive electrode frame and a size of the negative electrode frame.

4. The integrated electrode frame according to claim 3, wherein the positive electrode frame or the negative electrode frame has an encircling step around the through-hole; and the membrane is located on the encircling step, and is hermetically connected to the encircling step.

5. The integrated electrode frame according to claim 1, wherein the membrane is non-transparent or transparent; and
one of the positive electrode frame and the negative electrode frame is transparent, and the other of the positive electrode frame and the negative electrode frame is non-transparent.

6. The integrated electrode frame according to claim 5, wherein
if the membrane which is hermetically connected to the positive electrode frame is non-transparent, the positive electrode frame is transparent, and the negative electrode frame is non-transparent;
if the membrane which is hermetically connected to the positive electrode frame is transparent, the positive electrode frame is non-transparent, and the negative electrode frame is transparent;
a material composition of a connecting part of the membrane and the positive electrode frame contains at least one material which is the same as that of the membrane or the positive electrode frame; and
the same material is at least one selected from the group consisting of PP, PE, PS, PC, ABS, PMMA, and PET.

7. The integrated electrode frame according to claim 5, wherein
a laser transmittance of the transparent electrode frame is 20% or above;
a laser transmittance of the non-transparent electrode frame is 5% or below; and
a difference of the laser transmittance between the transparent electrode frame and the non-transparent electrode frame is 15-100%.

8. The integrated electrode frame according to claim 7, wherein
the laser transmittance of the transparent electrode frame is 40% or above;
the laser transmittance of the non-transparent electrode frame is 1% or below; and
the difference of the laser transmittance between the transparent electrode frame and the non-transparent electrode frame is 35-100%.

9. The integrated electrode frame according to claim 5, wherein the transparent material comprises at least one selected from the group consisting of PP, PE, PS, PC, ABS, PMMA, and PET; and
the non-transparent material comprises the transparent material and a toner.

10. The integrated electrode frame according to claim 9, wherein
the toner is at least one selected from the group consisting of a black toner, a yellow toner, a tan toner, a brown toner, and a dark blue toner; and
the transparent material further comprises a white toner.

11. The integrated electrode frame according to claim 1, wherein the membrane has a thickness of 100 µm to 3 mm, a porosity of 40-90%, and a pore size of 1-300 nm.

12. The integrated electrode frame according to claim 1, wherein a content of the same material accounts for 10% or more of a total weight of the material composition of respective structure.

13. The integrated electrode frame according to claim 1, wherein a content of the same material accounts for 40% or more of a total weight of the material composition of respective structure.

14. The integrated electrode frame according to claim 1, wherein the flat plate has a fluid distribution channel.

15. A method for preparing the integrated electrode frame according to any one of claims 1 to 14, comprising at least the following steps:
covering the membrane on a surface of one of the positive electrode frame and the negative electrode frame where the through-hole is formed, and hermetically connecting the membrane with the peripheral edge of the through-hole to form a membrane-bonded electrode frame; and
laminating the other of the positive electrode frame and the negative electrode frame with the membrane-bonded electrode frame, and hermetically connecting a peripheral edge of the other of the positive electrode frame and the negative electrode frame with a peripheral edge of the membrane-bonded electrode frame, wherein the membrane is located between the positive electrode frame and the negative electrode frame to form the integrated electrode frame.

16. The method according to claim 15, wherein when the membrane is transparent, the method comprises:
covering the membrane on the surface of a non-transparent electrode frame where the through-hole is formed, and hermetically connecting the membrane with the peripheral edge of the through-hole to form a membrane-bonded non-transparent electrode frame; and
laminating a transparent electrode frame with the membrane-bonded non-transparent electrode frame, and fixedly connecting a peripheral edge of the transparent electrode frame with a peripheral edge of the membrane-bonded non-transparent electrode frame, wherein the membrane is located between the transparent electrode frame and the non-transparent electrode frame to form the integrated electrode frame; and
alternatively, when the membrane is non-transparent, the method comprises:
covering the membrane on the surface of the transparent electrode frame where the through-hole is formed, and hermetically connecting the membrane with the peripheral edge of the through-hole to form a membrane-bonded transparent electrode frame; and
laminating the non-transparent electrode frame with the membrane-bonded transparent electrode frame, and fixedly connecting a peripheral edge of the non-transparent electrode frame with a peripheral edge of the membrane-bonded transparent electrode frame, wherein the membrane is located between the non-transparent electrode frame and the transparent electrode frame to form the integrated electrode frame.

17. The method according to claim 15, wherein hermetical connection is implemented by laser welding.

18. The method according to claim 17, wherein the membrane is hermetically connected to the peripheral edge of the through-hole by laser welding with a welding power of 2-50 W and a welding speed of 2-20 mm/s.

19. The method according to claim 17, wherein the peripheral edges of the electrode frames are hermetically connected by laser welding with a welding power of 15-300 W and a welding speed of 5-50 mm/s.

20. A use of the integrated electrode frame according to any one of claims 1 to 14 or an integrated electrode frame prepared by the method according to any one of claims 15 to 19 for a stack of all-vanadium flow batteries, wherein the stack comprises one cell or a plurality of cells connected in series; and the cell comprises the integrated electrode frame.
